# EUROPEAN PATENT APPLICATION

(11) **EP 4 834 660 A1**
(43) Date of publication of application: **04.11.2026**
(21) Application number: 26175847.8
(22) Date of filing: 30.04.2026
(51) Int. Cl.: B60N 3/10, B60R 7/08

(54) **A PART FOR A VEHICLE INTERIOR AND A METHOD OF FORMING THE PART**

(30) Priority: 01.05.2025 US 202563798063 P
(71) Applicant: Adient US LLC, Plymouth, MI 48170 (US)
(72) Inventor: RAJKUMAR, Joseph, Plymouth (MI), 48170 (US); PARRIS, Allison, Plymouth (MI), 48170 (US); KISZKA, Michael, Plymouth (MI), 48170 (US); ALTIZER, Ken, Plymouth (MI), 48170 (US); SURYAWANSHI, Rahul, Plymouth (MI), 48170 (US)
(74) Representative: Liedtke & Partner Patentanwälte

(57) **Abstract**

A part (20) for a vehicle seat (10) may have a trim cover (70) and a bin coupled to the trim cover (70). The bin (40) may have a flange (120), and the flange (120) may be secured to the trim cover (70) by stitching (80) that extends at least partially through the flange (120) and the trim cover (70).

## Description

### Field

A part for a vehicle interior and a method of forming the part is depicted and described.

### Background

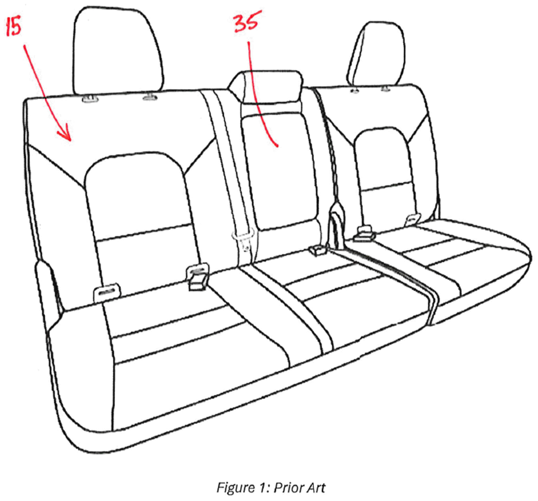

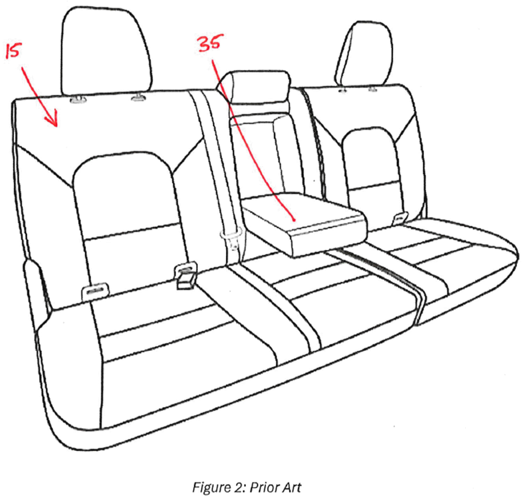

One embodiment of a prior art vehicle seat 15 and an armrest 35 associated with the seat 15 is shown in Figs. 1-2. The armrest 35 lacks the ability to store or securely contain objects therein or thereon, which is a significant disadvantage.

### Summary

A part for a vehicle seat may have a trim cover and a bin coupled to the trim cover. The bin may have a flange, and the flange may be secured to the trim cover by stitching that extends at least partially through the flange and the trim cover. The flange may have a depression that may receive at least a portion of the stitching, and the depression may have a groove that may have a depth sufficient to position the stitching below an upper surface of the flange.

The stitching may have one or more rows of thread that may form a continuous or non-continuous stitch pattern along at least a portion of the flange.

The stitching may have a top stitch and a bottom stitch that are connected to one another at one or more turns.

The top stitch may extend from an upper surface of the flange through a thickness of the flange into the trim cover and reverse direction at the one or more turns, and the bottom stitch may extend from a lower surface of the trim cover into a thickness of the trim cover and reverse direction at the one or more turns with the top and bottom stitches overlapping where the top and bottom stitches reverse direction.

The flange may extend continuously about a perimeter of the bin and may have a width between approximately 5mm and approximately 10mm.

The flange may be flexible, elastic, and configured to be selectively bent during coupling of the bin to the trim cover.

The bin may have a generally vertical surface that may extend from an interior edge of the flange and define at least at portion of a cavity.

The bin may have a core layer which may have a non-woven fabric and a cover layer which may have a resin material, and the stitching may extend through the core layer and the cover layer.

The cover layer may be at least partially located on the core layer.

The bin may have a base layer, and the base layer may have a resin.

The non-woven fabric may be permeable by the resin of the base layer.

The part may have a pad which may be coupled to at least one of the bin and the trim cover, and the bin may be positioned between the trim cover and the pad.

The pad may have a foam material that may be bonded to at least one of the bin and the trim cover.

The part may have air gaps between the bin and the pad.

The flange may be vertically offset from an upper surface of the bin.

### Brief description of the drawings

- Fig. 1: is a schematic perspective view of a vehicle seat known from the prior art with an armrest in a stored position;
- Fig. 2: is a schematic perspective view of a vehicle seat known from the prior art with an armrest in a use position;
- Fig. 3: is a schematic perspective view of a vehicle seat with a seat part in a stored position;
- Fig. 4: is a schematic perspective view of a vehicle seat with the seat part in a use position;
- Fig. 5: is a schematic perspective view of the seat part;
- Fig. 6: is a schematic perspective view of the seat part;
- Fig. 6A: is a schematic perspective view of the seat part;
- Fig. 7: is an exploded schematic perspective view of the seat part;
- Fig. 8: is a schematic perspective view of a bin;
- Fig. 9A: is a schematic perspective view of a cross section of the bin of Fig. 8;
- Fig. 9B: is a schematic perspective view of a cross section of the bin of Fig. 8;
- Fig. 10: is a schematic view of a cross section of the vehicle seat part of Fig. 6;
- Fig. 11: is a schematic partial view of the bin being joined to a trim cover;
- Fig. 12: is a schematic cross-sectional view of the bin being joined to a trim cover;
- Fig. 13: is a schematic partial view of the bin being joined to a trim cover;
- Fig. 14: is a schematic partial view of the bin being joined to a trim cover;
- Fig. 15: is a schematic perspective view of the bin and a flange of the bin;
- Fig. 16: is a partial perspective view of the bin being joined to a trim cover;
- Fig. 17: is a schematic cross sectional view of the bin after being inserted into the seat part;
- Fig. 18: is a schematic perspective view of the seat part;
- Fig. 19: is a schematic perspective view of the seat part coupled to the vehicle seat;
- Fig. 20: is a schematic cross sectional view of a first step in a process of forming the bin;
- Fig. 21: is a schematic cross sectional view of a second step in a process of forming the bin;
- Fig. 22: is a schematic perspective view of the bin;
- Fig. 23: is an exploded schematic perspective view showing a step of placing the bin in the seat part;
- Fig. 24: is a schematic perspective view showing a step of sewing the bin in the seat part;
- Fig. 25: is a flow chart showing the steps included in forming the seat part;
- Fig. 26: is a flow chart showing the steps included in forming the seat part;
- Fig. 27: is a flow chart showing the steps included in forming the seat part.

### Detailed Description

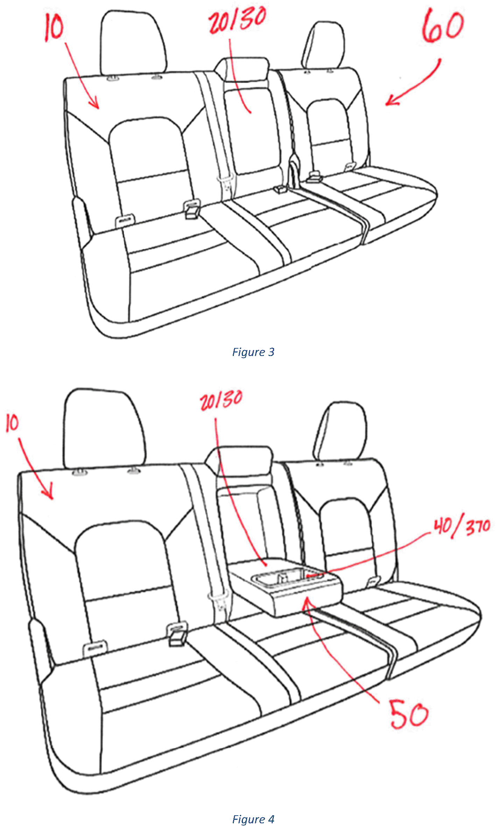

In order to overcome the disadvantage of the prior art design, a part 20 for a vehicle interior, such as a vehicle seat 10, may comprise an armrest 30 with a bin 40 connected thereto, according to an exemplary embodiment as schematically shown in Figs. 3-5.

While an armrest 30 is mentioned, the part 20 may be for other vehicle interior components as well. According to non-depicted exemplary embodiments, the part 20 may comprise a head restraint, or the part may comprise a lid for a storage compartment. The head restraint and lid are merely exemplary. It should be understood that the part may be used wherever there is trim. The part may be configured for (a) a use position 50 wherein the bin 40 is accessible for use and (b) a stowed position 60.

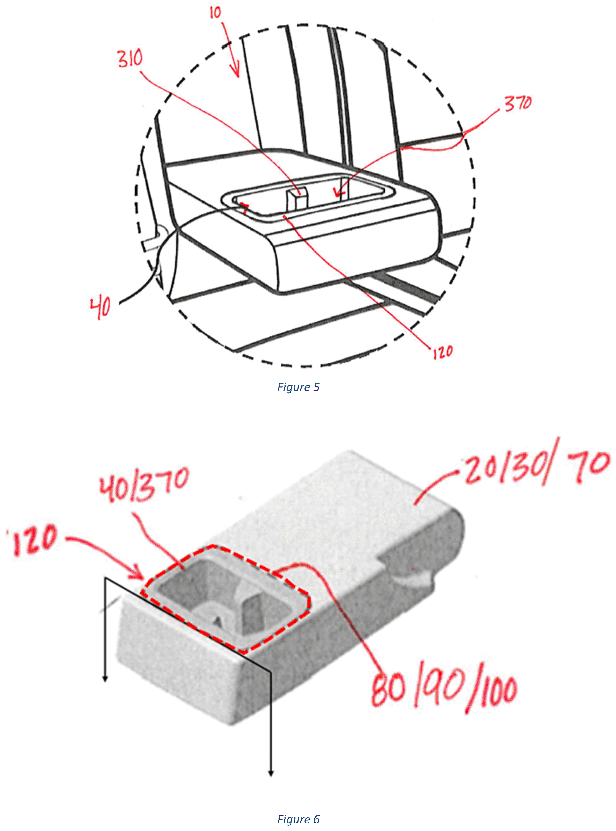

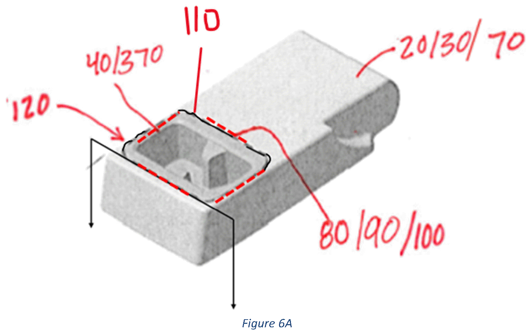

The bin 40 may be coupled to a trim cover 70 for the vehicle interior, such as the armrest 30, by stitching 80, according to the exemplary embodiment in at least Fig. 6. The stitching 80 may comprise one or more rows of sewn stitches 90 created by a needle with thread 100 in one or more machines and/or by hand. The thread 100 may be cotton, nylon or other fibers used in sewing.

According to an exemplary embodiment, the stitch patterns may be such as a T90/T90 or a T135-T150/T90 with a 5mm stitch pitch. The needle size may be such as #19 to #23 where the needle tip may be a diamond tip. The needle and stitch patterns may be designed to reduce/eliminate the risk for tearing or separation of the bin and the trim cover. While specific trim patterns and needle sizes are mentioned, any pattern or needle size capable of preventing the bin and the trim cover from tearing or separating may be used.

The thread 100 may extend at least partially between the bin 40 and the trim cover 70. In some embodiments, the thread 100 may extend at least partially through the bin 40 and the trim cover 70 to connect the bin and the trim cover together. The stitching 80 may be continuous or non-continuous. For example, the stitching 80 may extend continuously about the bin 40, as shown in Fig. 6, or there may be unstitched gaps 110, as shown in Fig. 6A between lengths of stitching 80. In some embodiments, the stitching 80 may be visible, not visible or partially visible.

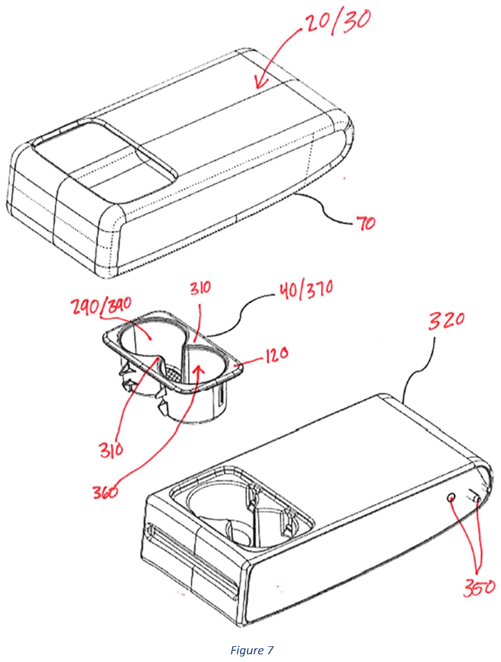

The bin 40 may comprise a flange 120 as shown at least in Figs. 7-8. The flange 120 may extend about the bin 40 in a generally planar manner. As may be seen in the figures, the extension may be continuous, but in other cases the extension may be non-continuous. The flange 120 may comprise a width of approximately 5-10mm according to exemplary embodiments. It may be that a width of 8mm is preferred.

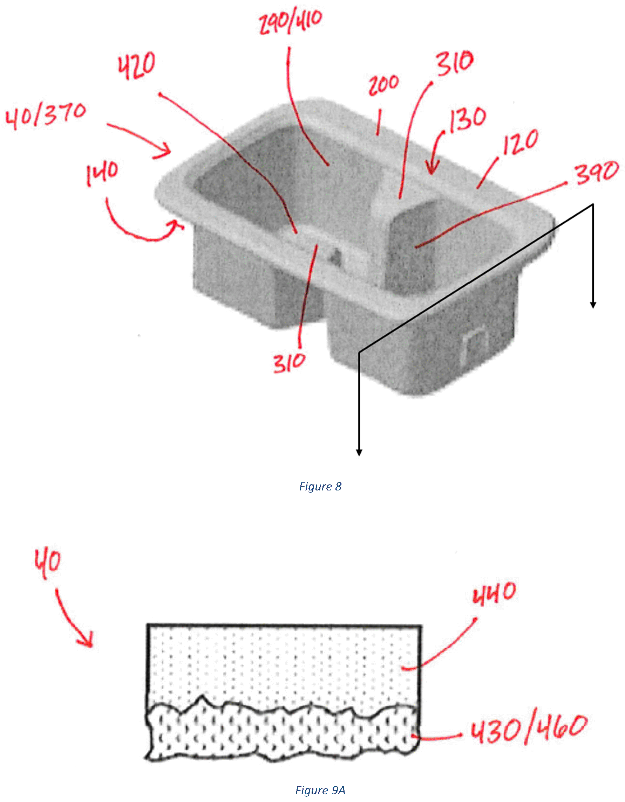

As shown in Fig. 8, the flange 120 may have an upper surface 130 and a lower surface 140 that define a substantially constant thickness between them. In other cases, the thickness of the flange 120 may vary about the bin 40.

The flange 120 may extend outwardly from the bin 40 and into an interior portion of the vehicle. In some cases, the flange 120 may be cantilevered from the bin 40.

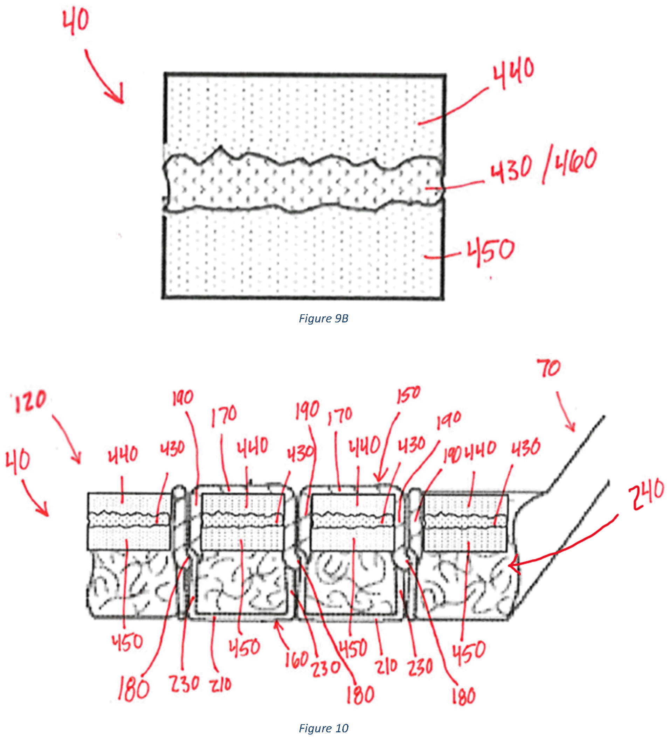

According an exemplary embodiment shown at least in Fig. 6, the flange 120 may be coupled to the trim cover 70 by the stitching 80. The stitching 80 may comprise a top stitch 150 and/or a bottom stitch 160 as schematically shown in Fig. 10. The top and bottom stitches 150,160 may be connected together in whole or in part. The connection may be such as between the trim cover 70 and the bin 40, including the flange 120. Thus, the top stitch 150 may have at least a first part 170 that initially extends from the upper surface 130 of the flange 120 into the thickness of the flange 120 toward the trim cover 70. The top stitch 150 may extend through the thickness of the flange 120 into the trim cover 70.

The top stitch 150 may reverse direction at a turn 180 and a second part 190 may extend from the body 200 of the flange 120 upwardly toward the upper surface 130 of the flange 120. The top stitch 150 may reverse direction in the trim cover 70. The first and second parts 170, 190 may be at least partially parallel one another. The bottom stitch 160 may have at least a first part 210 initially extending from a bottom surface 220 of the trim cover 70 into the thickness of the trim cover 70. The bottom stitch 160 may reverse direction at a turn 180 and a second part 230 may extend from the body 240 of the trim cover 70 downwardly towards the lower surface 220. The top and bottom stitches 150, 160 may be connected to one another at the turns 180 in that the turns 180 may be overlapped with one another.

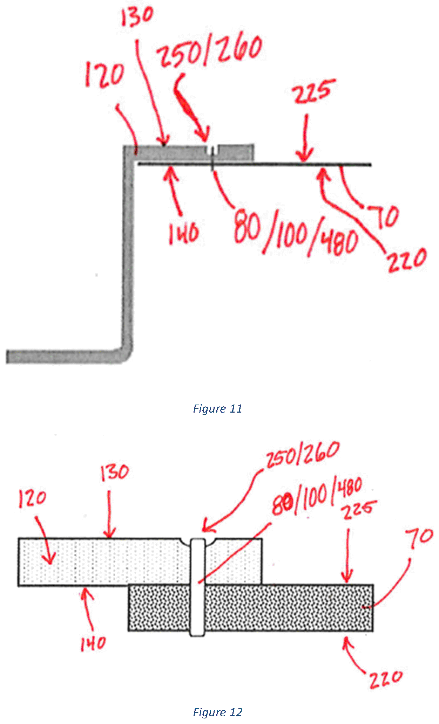

The flange 120 may comprise a depression 250 according to the exemplary embodyment shown at least in Figs. 11 and 12. The depression 250 may be formed in the flange 120.

The stitching 80 may be positioned in the depression 250 as schematically shown in Fig. 11. The depression 250 may comprise a continuous or discontinuous groove 260 in the flange 120. The depression 250 may have a depth of approximately the thread 100 diameter plus 1 mm so that at least the top stitch 150 may be positioned below the planar upper surface 130 of the flange 120. Positioning the top stitch 150 below the planar upper surface 130 may reduce interaction of the top stitch 150 with wearing conditions such as human contact, thereby increasing durability, as well as provide an aesthetically pleasing appearance.

In the exemplary embodiments of Figs. 11-16, the flange 120 may be flexible and elastic so that it may be selectively bent or flattened so that the trim cover 70 may be attached by sewing. Elastic may be understood to mean that the flange 120 may return to an original shape after being bent. In other words, the shape of the flange 120 may not be permanently altered by the bending of the flange 120. Further, in some exemplary embodiments, the flange 120 may be offset 270 from a top surface 280 of the bin 40 where the offset 270 is designed to accommodate a seam allowance.

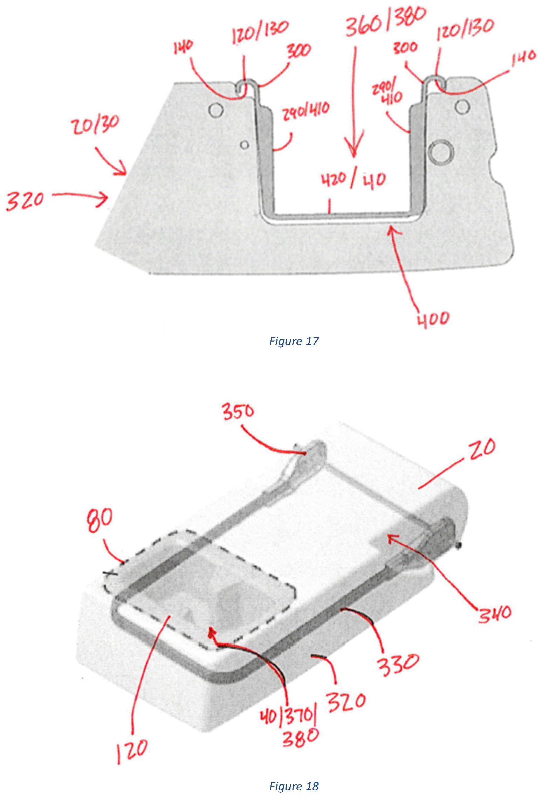

According to the exemplary embodiment shown at least in Fig. 17, the bin 40 may comprise a generally vertical surface 290 extending downward from an interior edge portion 300 of the flange 120 in whole or in part. The vertical surface 290 may be generally transverse to the direction of the flange 120. In some cases, the vertical surface 290 may extend continuously about the bin 40 and form a perimeter thereof. As shown at least in Fig. 8, the vertical surface 290 may take on a generally rectangular or oval shape with exceptions for indentations 310 in certain embodiments.

The part 20 may also comprise a pad 320 as schematically shown at least in Fig. 7. The pad 320 may be connected, such as bonded, in whole or in part, to the bin 40 and/or to the trim cover 70. The pad 320 may be formed to the bin 40 and thus have at least a partially complementary shape to the bin 40. The pad 320 may comprise a foam material in whole or in part and may be comprised of polyurethane in whole or in part. While foam and polyurethane are mentioned, any material capable of being coupled to the bin 40 while maintaining the aesthetic and functional features of the pad 320 may be used.

The bin 40 may be coupled between the trim cover 70 and the pad 320. "Between" may be understood to mean that the upper surface 130 of the flange 120 may be in direct facing contact with a bottom surface 220 of the trim cover 70 and the lower surface 140 of the flange 120 may be in direct facing contact with the pad 320.

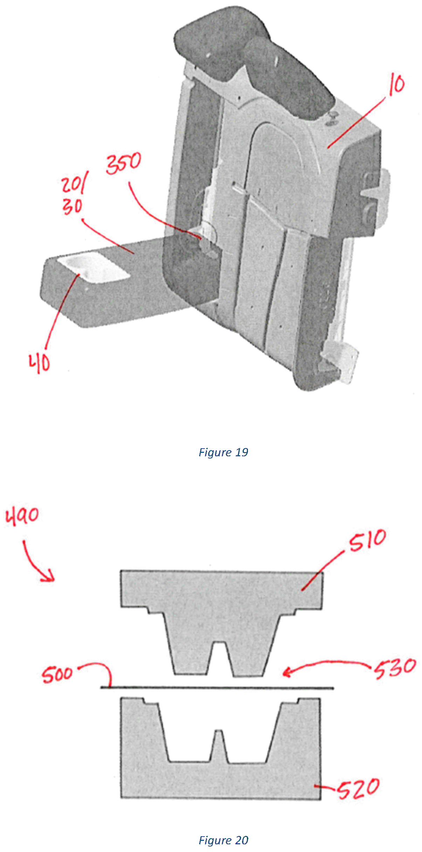

The part may also comprise a frame 330 as schematically shown in Fig. 18. The frame 330 may be located in the pad 320 or elsewhere in the part 20. The frame 330 may be such as a rigid material that extends at least partially about the part 20, such as in an interior portion 340 of the part 20. The frame 330 may function as a skeleton for the part 20 upon which the various other portions of the part discussed herein may be connected or rest. In the case where the part is an armrest 30, the frame 330 may connect with one or more joints 350 to permit the armrest 30 to selectively rotate up or down, which may be according to the exemplary embodiment in Fig. 19.

As shown at least in Fig. 17, the bin 40 may comprise a cavity 360. The cavity 360 may be defined in whole or in part by the vertical surface 290 and/or the flange 120. As noted above, and as shown at least in Fig. 8, indentations 310 in at least the vertical surface 290 may exist. The indentations 310 may be used to form structures in the bin 40. In one embodiment, one or more indentations 310 may divide the cavity 360 such that one or more areas are formed. In some cases, the areas may be adapted to be cup holders 370.

The indentations 310 may extend radially inward from the vertical surface 290 of the cavity 360. While Fig. 8 shows two indentations 310, any number of indentations 310 may be used. By way of example, all indentations 310 may extend radially inward from the vertical surface 290 of the cavity 360 to the same extent. In other words, the indentations 310 may all radially extend inward by the same distance measured from the vertical surface 290. While indentations 310 that extend radially inward by the same distance are mentioned, the indentations 310 may extend radially inward by different distances.

The cavity 360 may be one piece, unitary, and integrally formed, or the cavity 360 may comprise multiple different pieces. The cavity 360 may be watertight and may comprise a tubular or cylindrical shape. While a tubular or cylindrical shape is mentioned, the cavity 360 may comprise any shape necessary to fit the needs of the application.

While the term cup holder is mentioned, it can be appreciated that the areas are not limited to cup holders 370. Instead, the areas may comprise storage areas 380 for a wide variety of fluid holding devices, or simply general storage areas 380.

The indentations 310, and/or other structures associated with the bin 40, may be configured to grip an object. According to an exemplary embodiment, the indentations 310 may extend inwardly into the cavity 360. The indentations 310 may form an at least partially complementary surface 390, or contact points 390, for an object to be located within the storage area 380, as schematically shown in at least Fig. 8. The indentations 310 may be of generally equal size and shape to one another or they may be different sizes and shapes. Further, the indentations 310 may be equally or unequally spaced from one another about the cavity 360.

In an exemplary embodiment the bin 40 may have one or more pads 320. As shown in Fig. 17, one or more air gaps 400 may be located at least partially between the pad 320 and the bin 40. The air gaps may be present to allow the bin to expand slightly, or the air gaps may be a product of tolerancing. In other words, the bin may not be form fitting with the pad.

In an exemplary embodiment, the pad 320 may be located at least partially about the vertical surface 290. The pad 320 may also be located adjacent a base 420 of the bin 40. The pad 320 may function to absorb or deflect liquid, such as condensation from a liquid container. The pad 320 may also assist in gripping or securing any object or container located within the bin 40.

In an exemplary embodiment, as shown in Fig. 17, the wall 290 may comprise a textured wall 410. The base 420 of the bin 40 may have the same or a different texture as the wall 290. By way of example, the textured wall 410 may comprise a texture such as raised protrusions such as bumps, waves, grooves, and/or thread-like protrusions. While bumps, waves, grooves, and/or thread-like protrusions are mentioned, the textured wall 410 may comprise any texture necessary to fit the needs of the application.

The flange 120 of the bin 40 may comprise a width and a thickness; the indentations 310 of the bin 40 may comprise a width and/or thickness greater than the width and/or thickness of the flange 120 of the bin 40, as schematically shown in Fig. 8.

The bin 40 may comprise a single layer of flexible or non-flexible material. In one embodiment, the bin 40 may be constructed in whole or in part by a resin material. The bin 40 may comprise a one-piece, integrally formed, unitary, continuous, molded bin 40. In one case, the bin 40 may comprise a formed resin.

In an exemplary embodiment depicted in Figs. 9A and 9B, the bin 40 may comprise a core layer 430 and a cover layer 440 that may be at least partially located on the core layer 430. The stitching 80 may extend through the cover layer 440 and the core layer 430. In some cases, the bin 40 may also comprise a base layer 450 under the core layer 430, according to the exemplary embodiment in Fig. 9B.

The core layer 430 may comprise a base fabric 460. The base fabric 460 may comprise a continuous or non-continuous non-woven fabric such as a felt and/or a mesh. The base fabric 460 may be configured to resist or prevent tearing of the bin 40, the trim cover 70, and/or the pad 320. According to an exemplary embodiment, the non-woven nature of the base fabric 460 may have a rip-stop function to one or all of the foregoing features.

The cover layer 440 may comprise a skin 440. The skin 440 may be formed by spraying a material in whole or in part on the core layer 430. By way of example, the base fabric 460 may be at least partially encapsulated within the skin 440. The skin 440 may comprise a resin, such as a polyurethane material, which may form the skin 440. While a polyurethane material is mentioned, any resin necessary to meet the needs of the application may be used.

The cover layer 440 may comprise a texture. The texture of the cover layer 440 may be formed in the cover layer 440 in whole or in part. The texture of the cover layer 440 may be any necessary to fit the needs of the application, but by way of example, the texture may be raised protrusions such as bumps, waves, grooves, and/or thread-like protrusions.

In an exemplary embodiment, the base layer 450 may be comprised of resin. By way of example, the base layer 450 may be comprised of the same resin material as the cover layer 440, such as a polyurethane material. While a resin for the base layer 450 comprised of the same material as the resin for the cover layer 440 is mentioned, the resin for the base layer 450 may be comprised of a different material than the resin for the cover layer 440.

The base layer 450 may be present when the core layer 430 comprises a material that is permeable by the resin of the cover layer 440. For example, the base layer may be formed by resin that flows through the core layer. Similarly, the base layer 450 may be absent when the core layer 430 comprises a material that is impermeable by the resin of the cover layer 440. While a base layer 450 that may be dependent upon the permeability of the core layer 430 is mentioned, the base layer 450 may be present under any conditions if desired.

The base layer 450 may comprise a thickness between approximately 0.1mm and approximately 0.3mm. The cover layer 440 may comprise a thickness between approximately 0.3mm and approximately 0.8mm, preferably 0.3-0.4mm.

While a separate and distinct cover layer 440, core layer 430, and base layer 450 are mentioned, the cover layer 440, core layer 430, and base layer 450 may simply define different depths of the same piece and may not be separate and distinct layers.

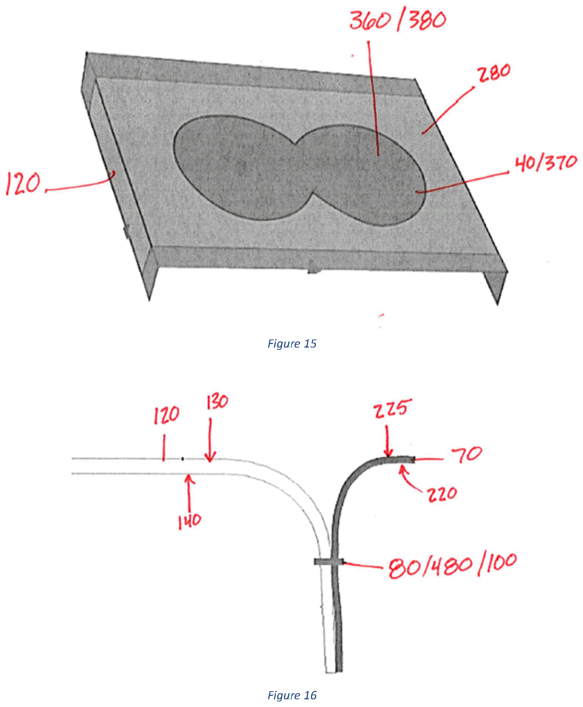

The bin 40 may be coupled to the trim cover 70 at a seam 480, as shown in Fig. 16. The seam 480 may be at least partially embedded in the pad 320.

As shown in Figs. 11, 12, and 13, by way of example, the flange 120 may overlap the trim cover 70 such that the lower surface 140 of the flange 120 is in direct facing contact with an upper surface 225 of the trim cover 70. The flange 120 may then be stitched to the trim cover 70 by a stitch. As previously described and as shown in Figs. 11 and 12, the stitching 80 that may secure the flange 120 to the trim cover 70 may be located in the groove 260.

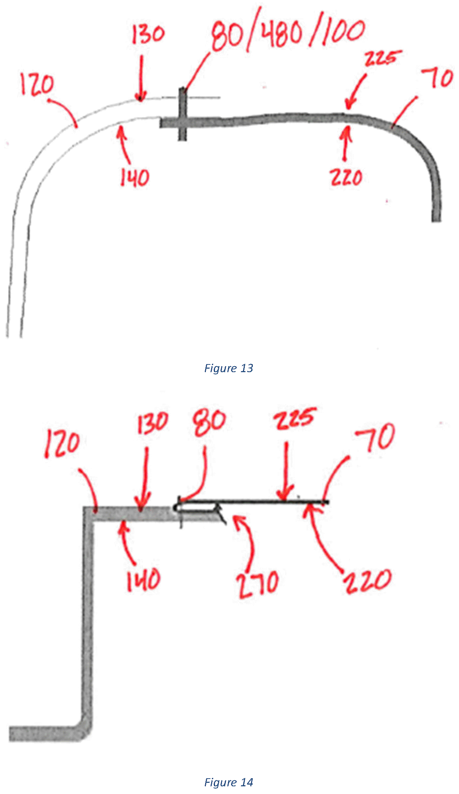

As shown in Fig. 13, by way of example, the trim cover 70 may overlap the flange 120 such that the lower surface 220 of the trim cover 70 in direct facing contact with the upper surface 130 of the flange 120. As shown in Fig. 14, the flange 120 may be offset 270 from the top surface 280 of the bin 40. The trim cover 70 may overlap the flange 120 and be secured to the flange 120 by stitching 80. The trim cover 70 may be folded on top of the flange 120 such that the upper surface 225 of the trim cover 70 is in direct facing contact with the upper surface 130 of the flange 120. While a folded trim cover 70 is mentioned, the trim cover 70 may not be folded, and the bottom surface 220 of the trim cover 70 may be in direct facing contact with the upper surface 130 of the flange 120.

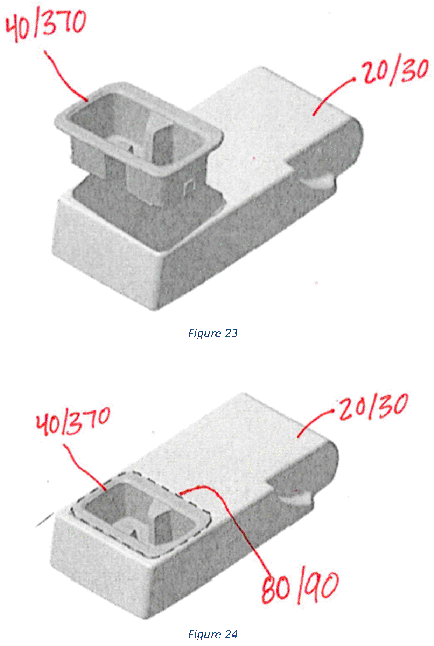

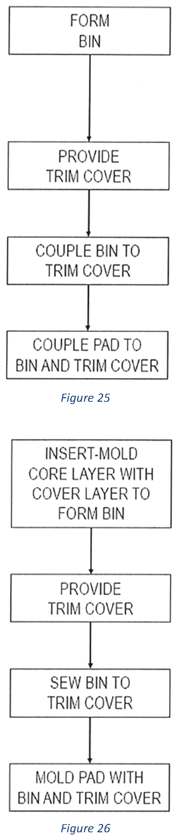

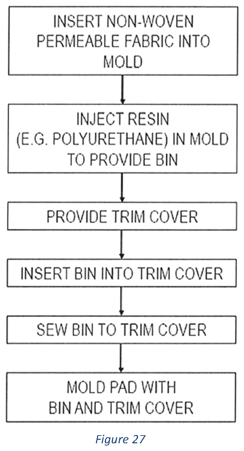

According to an exemplary embodiment shown in at least Figs. 19-27, a process for producing the part 20 for a vehicle interior may comprise forming the bin 40, providing the trim cover 70, and coupling the bin 40 to the trim cover 70. The pad 320 may be coupled to the bin 40 and the trim cover 70 as described above and depicted in the figures.

The step of coupling the bin 40 to the trim cover 70 may comprise sewing the bin 40 to the trim cover 70 as described above and depicted in the figures. The step of coupling the bin 40 to the trim cover 70 may also comprise sewing the flange 120 of the bin 40 to the trim cover 70.

The step of coupling the bin 40 to the trim cover 70 may also comprise sewing the bin 40 to the trim cover 70 at a seam 480, wherein the step of coupling a pad 320 to the bin 40 and the trim cover 70 may comprise embedding the seam 480 in the pad 320.

The stitching 80 used to sew the bin 40 to the trim cover 70 may extend through all of the cover layer 440, core layer 430, and base layer 450 (if present), or the stitching may extend through only one or two of the layers.

The step of forming the bin 40 may also comprise inserting a length of non-woven permeable fabric 500 into a mold 490, according to the exemplary embodiment in Fig. 19. The mold 490 may have upper and lower parts 510, 520 that move together and shape the fabric 500 into the part 20. A gap 530 may be provided in the mold 490 to accommodate the thickness of the fabric 500.

The step of forming the bin 40 may also comprise injecting a resin, such as a polyurethane, into a mold 490 having the predetermined shape of the part 20 according to the exemplary embodiment in Fig. 20. In such a case, the mold 490 defines a gap 530 between the upper and lower mold parts 510, 520 that receive the liquid resin. The gap 530 defines the shape of the part 20.

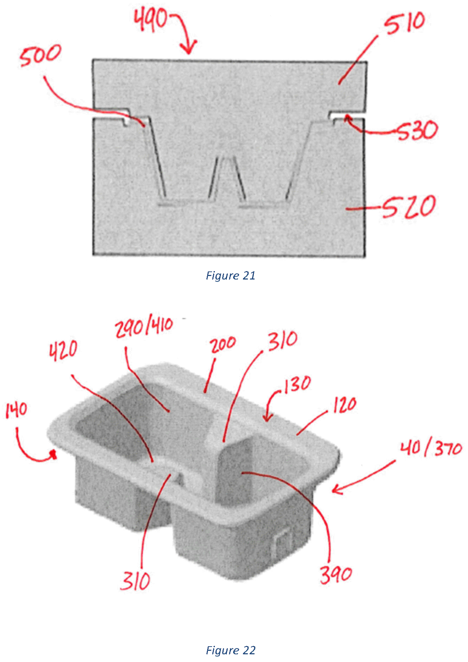

Regardless of the method to form the part 20, the part 20 may be formed according to the exemplary embodiment in Fig. 21. Further, both methods may be used to form the flange 120 on the bin 40 as well as the cavity 360, indentations 310 and other features.

The step of forming the bin 40 may also comprise (a) joining the cover layer 440 to the core layer 430 and, optionally, (b) forming the base layer 450 and the cover layer 440 together to form the bin 40 into a three-dimensional shape. The base layer 450 may be formed by selecting a core layer 430 that is permeable by the resin. In such a case, when the resin is applied to the core layer 430, the resin may flow through and/or around the core layer 430 to form the base layer 450.

The step of forming the bin 40 may also comprise (a) applying the resin, such as the polyurethane material as previously mentioned, to the base fabric 460 and (b) forming the resin and the base fabric 460 together to form the bin 40 into a three-dimensional shape.

The pad 320 may be formed by injecting a foam in an opening (not depicted) of the trim cover 70. The pad 320 may bond in whole or in part to the bin 40 and the trim cover 70 as the foam solidifies. In some cases, the step of coupling the pad 320 to the bin 40 and the trim cover 70 may comprise forming a chemical bond between the pad 320 and the bin 40 and a chemical bond between the pad 320 and the trim cover 70.

In accordance with the provisions of the patent statutes, the present device and/or method has been described in what is considered to represent its preferred embodiments. However, it should be noted that the present device and/or method can be practiced otherwise than as specifically illustrated and described without departing from its spirit or scope.

### List of References

- 10: vehicle seat
- 15: vehicle seat (prior art)
- 20: part
- 30: armrest
- 35: armrest (prior art)
- 40: bin
- 50: use position
- 60: stowed position
- 70: trim cover
- 80: stitching
- 90: sewn stitch
- 100: thread
- 110: unstiched gap
- 400: air gap
- 530: gap
- 120: flange
- 130: upper surface of the flange
- 225: upper surface of the trim cover
- 140: lower surface
- 150: top stitch
- 160: bottom stitch
- 170, 210: first part
- 180: turn
- 190, 230: second part
- 200, 240: body
- 220: bottom surface
- 250: depression
- 260: groove
- 270: offset
- 280: top surface
- 290: vertical surface/wall
- 300: interior edge portion
- 310: indentations
- 320: pad
- 330: frame
- 340: interior portion
- 350: joint
- 360: cavity
- 370: cup holder
- 380: storage area
- 390: contact points
- 410: textured wall
- 420: base
- 430: core layer
- 440: cover layer, skin
- 450: base layer
- 460: base fabric
- 480: seam
- 490: mold
- 500: fabric
- 510: lower part
- 520: upper part

## Claims

1. A part (20) for a seat (10), comprising:
a trim cover (70),
a bin (40) coupled to the trim cover (70),
wherein the bin (40) comprises a flange (120),
wherein the flange (120) is secured to the trim cover (70) by stitching (80) that extends at least partially through the flange (120) and the trim cover (70),
wherein the flange (120) comprises a depression (250) configured to receive at least a portion of the stitching (80),
wherein the depression (250) comprises a groove (260) having a depth sufficient to position the stitching (80) below an upper surface (130) of the flange (120).

2. The part (20) of claim 1, wherein the stitching (80) comprises one or more rows of thread (100) forming a continuous or non-continuous stitch pattern along at least a portion of the flange (120).

3. The part (20) of claim 1, wherein the stitching (80) comprises a top stitch (150) and a bottom stitch (160) that are connected to one another at one or more turns (180).

4. The part (20) of claim 3, wherein the top stitch (150) extends from an upper surface (130) of the flange (120) through a thickness of the flange (120) into the trim cover (70) and reverses direction at the one or more turns (180), and the bottom stitch (160) extends from a lower surface of the trim cover (70) into a thickness of the trim cover (70) and reverses direction at the one or more turns (180), the top and bottom stitches (150, 160) overlapping where the top and bottom stitches (150, 160) reverse direction.

5. The part (20) of claim 1, wherein the flange (120) extends continuously about a perimeter of the bin (40) and has a width between approximately 5mm and approximately 10mm.

6. The part (20) of claim 1, wherein the flange (120) is flexible, elastic, and configured to be selectively bent during coupling of the bin (40) to the trim cover (70).

7. The part (20) of claim 1, wherein the bin (40) further comprises a generally vertical surface (290) extending from an interior edge of the flange (120) and defining at least a portion (340) of a cavity (360).

8. The part (20) of claim 1, wherein the bin (40) further comprises a core layer (430) comprising a non-woven fabric, and a cover layer (440), which comprises a resin material, wherein the stitching (80) extends through the core layer (430) and the cover layer (440).

9. The part (20) of claim 8, wherein the cover layer (440) is at least partially located on the core layer (430).

10. The part (20) of claim 1, wherein the bin (40) further comprises a base layer (450), wherein said base layer (450) is comprised of a resin.

11. The part (20) of claim 10, wherein the non-woven fabric is permeable by the resin of the base layer (450).

12. The part (20) of claim 1, further comprising a pad (320) coupled to at least one of the bin (40) and the trim cover (70), the bin (40) being positioned between the trim cover (70) and the pad (320).

13. The part (20) of claim 12, wherein the pad (320) comprises a foam material and is bonded to at least one of the bin (40) and the trim cover (70).

14. The part (20) of claim 12, wherein air gaps (400) are present between the bin (40) and the pad (320).

15. The part (20) of claim 1, wherein the flange (120) is vertically offset (270) from an upper surface (130) of the bin (40).
